# EUROPÄISCHE PATENTANMELDUNG

(11) **EP 1 337 118 A2**
(43) Veröffentlichungstag der Anmeldung: **20.08.2003**
(21) Anmeldenummer: 02028473.3
(22) Anmeldetag: 19.12.2002
(51) Int. Cl.: H04Q 7/22, H04M 3/53

(54) **Verfahren zum Versenden von Textnachrichten mittels eines Paketvermittlungsverfahrens und Anordnung zur Durchführung dieses Verfahrens**

(30) Priorität: 15.02.2002 DE 10206216
(71) Anmelder: Deutsche Telekom AG, 53113 Bonn (DE)
(72) Erfinder: Jethon, Michaela, 1140 Wien (AT); Seele, Heike, 64295 Darmstadt (DE)

(57) **Zusammenfassung**

Die Erfindung betrifft ein Verfahren zum Versenden von Textnachrichten mittels eines Paketvermittlungsverfahrens von einem ersten Telekommunikationsendgerät (10) über ein Telekommunikationsnetz (12, 16) zu einem Nachrichtenserver (22), der die Textnachrichten an zumindest ein zweites Telekommunikationsendgerät/Empfänger (18, 20, 32, 34, 36) in einem ausgewählten Datenformat zustellt, von dem es akustisch und/oder optisch ausgegeben wird. Die Erfindung zeichnet sich dadurch aus, dass als erstes Telekommunikationsendgerät ein öffentliches, mit einer Bezahleinheit versehenes Telefon (10) verwendet wird, das von einem von der Bezahleinheit ausgewiesenen Guthaben einen Betrag für geleistete Telekommunikationsdienste abbucht, und dass die Textnachricht über Eingabemittel des öffentlichen Telefons (10) eingegeben wird.

## Beschreibung

Die Erfindung betrifft ein Verfahren zum Versenden von Textnachrichten mittels eines Paketvermittlungsverfahrens gemäß der im Oberbegriff des Anspruches 1 angegebenen Art sowie eine Anordnung zur Durchführung des Verfahrens gemäß dem Anspruch 20.

In der Nachrichtenübermittlung ist ein Verfahren zum Versenden von Textnachrichten mittels eines Paketvermittlungsverfahrens von einem ersten Telekommunikationsendgerät über ein Telekommunikationsnetz zu einem zweiten Telekommunikationsteilnehmer bekannt. Hierbei werden einzelne Nachrichteneinheiten in Form von Nachrichtenpaketen, welche die gesamten oder einen Teil der zu übermittelnden Informationen enthalten, übermittelt. Eine Nachricht kann dabei in eine Anzahl von Nachrichtenpaketen zerlegt werden. Diese werden jeweils mit einem Kopf - Header - und einem Ende - Trailer - versehen. Kopf, Nutzinformationseinheit - Payload - und Ende bilden ein Nachrichtenpaket. In Abhängigkeit vom gewählten Verfahren können die Nachrichtenpakete eine feste oder eine variable Länge haben.

Aus dem Mobilfunk ist seit längerem ein Kurzmitteilungsdienst - Short-Message-Service, SMS - bekannt, der die Übermittlung kurzer Nachrichten in einem Nachrichtenpaket fester Länge an ein mobiles Telekommunikationsendgerät von einem mobilen Telekommunikationsendgerät ermöglicht. Der Short-Message-Service kann über eine Umsetzungsfunktion auch mit elektronischen Nachrichtensystemen in Festnetzen gekoppelt werden, wie z. B. E-Mail - Internet - und X.400 - ISDN.

Besonders attraktiv für die Nutzer ist hierbei der Punkt-zu-Punkt-Kurzmitteilungsdienst, der das Senden von Short Messages von einem mobilen Telekommunikationsendgerät an eine Dienstzentrale - SMSC, Short-Message-Service-Center - und umgekehrt ermöglicht. Die Länge einer Short-Message ist auf höchstens 160 Zeichen begrenzt, wobei jedoch mehrere Nachrichten logisch miteinander verkettet werden können - Enhanced-Messages -, EMs.

Das Short-Message-Service-Center, SMSC, ist ein Nachrichtenserver, der als Speichersystem wirkt und die Aufgabe hat, die übergebenen Short-Messages dem adressierten Empfänger, also dem zweiten Telekommunikationsendgerät, zuzustellen, wobei mehrfache Wiederholungen möglich sind. Der Punkt-zu-Punkt-Kurzmitteilungsdienst ist ein bestätigender Dienst, d. h., jeder Absender einer Short-Message, also das erste Telekommunikationsendgerät, wird über die erfolgreiche Übermittlung einer Short-Message an das Short-Message-Service-Center, SMSC, informiert.

Ein Vorteil dieses Kurzmitteilungsdienstes ist, dass ohne vorherigen Aufbau einer Netzverbindung und parallel zu bestehenden Gesprächsverbindungen die Short-Messages - SMs - übermittelt werden.

Seit einiger Zeit ist es auch bekannt, SMs-fähigen Festnetzendgeräten derartige Short-Messages über das Festnetz zuzustellen. Auch hier übernimmt ein Nachrichtenserver - Short-Message-Service-Center Festnetz, SMSC F, - die Zustellung an den Empfänger im Festnetz. Der Empfänger kann dabei ein SMs-fähiges Endgerät im Festnetz sein. Aber auch ein Mobiltelefon, wobei dann die SMs über einen zugeordneten Nachrichtenserver zugestellt wird. Der Empfänger kann aber auch ein Sprachspeicher, wie die T-Netbox oder ein E-Mail-Server, sein, der die Nachricht dem Empfänger via Internet zustellt.

Möglich ist auch, dass der Empfänger ein Rechner in einem Call Center ist, der die Nachricht entgegennimmt. Anschließend wird die Nachricht von dem Call Center dem Empfänger zugestellt.

Die Abrechnung der SMs erfolgt über den Nachrichtenserver, in dem dieser die Informationen über gesendete SMs an einen Verwaltungsrechner weiterleitet, über den dann dieser Dienst vom Betreiber abgerechnet wird.

Des Weiteren sind öffentliche Telefone bekannt, mit denen Verbindungen über ein den öffentlichen Telefonen zugeordnetes internes Telekommunikationsnetz über weitere Telekommunikationsnetze zu verschiedensten Empfängern hergestellt werden. Diese öffentlichen Telefone weisen eine Bezahleinheit auf und werden über einen Rechner, ein so genanntes Hintergrundsystem, verwaltet. Dieses Hintergrundsystem gibt beispielsweise Verbindungen frei, wenn die Bezahleinheit ein entsprechendes Guthaben ausweist.

Der Erfindung liegt die Aufgabe zugrunde, ein Verfahren zum Versenden von Textnachrichten mittels eines Paketvermittlungsverfahrens gemäß der im Oberbegriff des Anspruches 1 angegebenen Art sowie eine Anordnung zur Durchführung des Verfahrens derart weiterzubilden, dass die Einsatzmöglichkeiten vergrößert werden.

Diese Aufgabe wird für das Verfahren durch die kennzeichnenden Merkmale des Anspruches 1 in Verbindung mit seinen Oberbegriffsmerkmalen gelöst.

Für die Anordnung wird diese Aufgabe durch die Merkmale des Anspruches 20 gelöst.

Die Unteransprüche bilden vorteilhafte Weiterbildungen der Erfindung.

Der Erfindung liegt die Erkenntnis zugrunde, dass das Versenden von Textnachrichten auch durch öffentliche Telefone möglich ist, da zusätzliche Leistungsmerkmale bei öffentlichen Telefonen durch Ergänzung der Programmstruktur umgesetzt werden können, wodurch eine Anpassung der bestehenden öffentlichen Telefone an das Leistungsmerkmal Versand von Textnachrichten durch Ergänzung der Programmstruktur durchaus möglich ist.

Nach der Erfindung wird daher als erstes Telekommunikationsendgerät ein öffentliches mit einer Bezahleinheit versehenes Telefon verwendet, das von einem von der Bezahleinheit ausgewiesenen Guthaben einen Betrag für geleistete Telekommunikationsdienste abbucht. Die Textnachricht wird über Eingabemittel des öffentlichen Telefons eingegeben.

Vorzugsweise wird über ein Eingabemittel die Einstellung des öffentlichen Telefons zur Eingabe und Übermittlung der Textnachricht vorgenommen. Die Eingabe der aus mehreren Zeichen bestehenden Textnachricht wird über die Eingabemittel durchgeführt. Die Rufnummer des Anschlusses des zweiten Telekommunikationsendgerätes wird ebenfalls über die Eingabemittel eingegeben und schließlich wird die Textnachricht über den Nachrichtenserver dem zweiten Telekommunikationsendgerät zugestellt.

Damit das Gerät erkennen kann, dass die Eingabe der Textnachricht und/oder der Rufnummer abgeschlossen ist, wird das Ende der jeweiligen Eingabe durch Bestätigung der in der Menüführung angegebenen Taste festgelegt. Die Eingabemittel werden dabei vorzugsweise durch die Tastatur des öffentlichen Telefons gebildet. Hierbei sind insbesondere die Tasten der Tastatur des öffentlichen Telefons mehrfach mit Zahlen, Ziffern und Zeichen belegt, wie dies auch bei Mobiltelefonen üblich ist.

Gemäß einer Ausführungsform der Erfindung ist die Anzahl der einzugebenden Zeichen für die Textnachricht beschränkt, wodurch eine schnellere Übertragung der Textnachricht gewährleistet wird. Dabei wird vorzugsweise das Erreichen der maximal möglichen Zahl an eingegebenen Zeichen dem Nutzer des öffentlichen Telefons akustisch und/oder optisch mitgeteilt.

Um den Empfänger der Textnachricht zu informieren, woher die Textnachricht kommt, wird in die Textnachricht eine Kennung eingebracht, die den Absender in Form des öffentlichen Telefons kennzeichnet.

Der Nutzer soll möglichst zielgerichtet seine Textnachricht in das öffentliche Telefon eingeben. Hierfür führt insbesondere das öffentliche Telefon den Nutzer über eine Anzeigevorrichtung über Anweisungen durch die einzelnen Bedienschritte zum Versenden der Textnachrichten.

Die Textnachricht kann dem Empfänger unterschiedlich zugestellt werden. Insofern kann gemäß einer Ausführungsform der Erfindung der Nutzer des öffentlichen Telefons über Eingabemittel die Art der Zustellung oder der Ausgabe beim zweiten Telekommunikationsendgerät festlegen, beispielsweise Zustellung als E-Mail, akustische Sprachausgabe, wie T-Netbox, optische Anzeige, Zustellung als Telefax oder ähnliches.

Das Versenden der Textnachricht von einem öffentlichen Telefon kann kostenpflichtig für den Absender sein. In diesem Fall wird überprüft, ob die Bezahleinheit ein Mindestguthaben ausweist. Im öffentlichen Telefon wird das Kartenguthaben überprüft. Das Guthaben kann in Zukunft auch in Form von Münzen eingegeben werden. Bei Vorhandensein eines Mindestguthabens wird der Versand der Textnachricht vom öffentlichen Telefon - freigegeben.

Gemäß einer Ausführungsform der Erfindung wird die Bezahleinheit durch ein Telefonwertkartenlesegerät gebildet, das mit dem Hintergrundsystem zusammenarbeitet.

Das Senden der Textnachricht wird vorzugsweise durch die Art der Eingabe, wie Betätigen vorbestimmter Eingabemittel, ausgelöst. Hierdurch kann der Nutzer des öffentlichen Telefons entscheiden, wann er die Textnachricht absenden will oder wann er die Textnachricht wieder löschen oder ändern will.

Die Textnachricht wird vom öffentlichen Telefon an das Hintergrundsystem weitergegeben, der zu bezahlende Betrag wird von dem Guthaben abgebucht und das Hintergrundsystem leitet die Textnachricht dann an den Nachrichtenserver weiter.

Beispielsweise kann der Nutzer über die Eingabemittel die Ausgabe einer optischen Werbebotschaft über das erste Telekommunikationsendgerät aktivieren. Insbesondere mit Aktivieren der Werbebotschaft wird der Versand der Textnachricht freigegeben. Nach Aktivieren der Werbebotschaft kann eine Abbuchung vom Guthaben für den Versand der Textnachricht vollständig oder teilweise unterbleiben, sodass die Textnachricht gratis oder zu einem geringeren Tarif versandt wird.

Damit eine einfache Verwaltung der Werbebotschaft ermöglicht wird, wird diese vom Hintergrundsystem mit der Regelmeldung an das öffentliche Telefon weitergegeben.

Für den Fall, dass das Mindestguthaben unterschritten wird, wird das Verfahren zum Versenden einer Textnachricht abgebrochen. Es kommt eine Aufforderung eine neue Karte einzuführen.

Vorzugsweise wird die Textnachricht in Form des Short-Messages-Verfahrens - SMs-Verfahrens - oder des Enhanced-Messages-Verfahrens - EMs-Verfahrens - versandt.

Weitere Vorteile, Merkmale und Anwendungsmöglichkeiten der vorliegenden Erfindung, insbesondere des Verfahrens zum Versenden von Textnachrichten mittels eines Paketvermittlungsverfahrens, ergeben sich aus der nachfolgenden Beschreibung in Verbindung mit den in der Zeichnung dargestellten Ausführungsbeispielen.

Die Erfindung wird im Folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine schematische Darstellung eines Telekommunikationsnetzes mit Short-Message-Service-Center - Festnetz-Server - und einem weiteren Netzwerk für öffentliche Telefone mit einem die öffentlichen Telefone verwaltenden Rechner;
- Fig. 2: eine detailliertere schematische Darstellung von Fig. 1 mit einem Konverter, einen Transferrechner, einer Firewall gemäß einer Ausführungsform der Erfindung, und
- Fig. 3: eine detailliertere schematische Darstellung von Fig. 1 mit einem Konverter, einen Transferrechner, einer Firewall gemäß einer zweiten Ausführungsform der Erfindung.

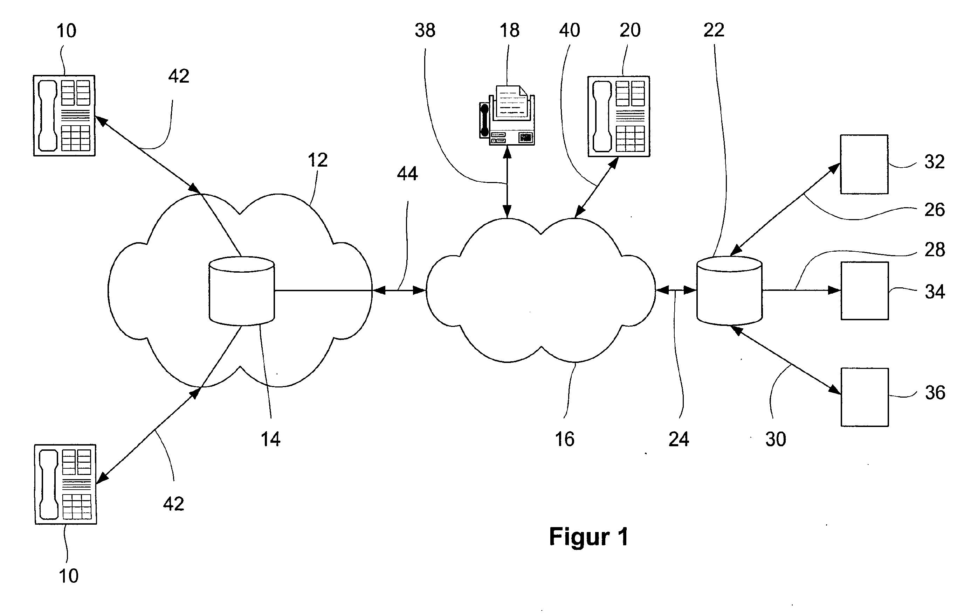

In Fig. 1 sind in einer schematischen Darstellung eine Anordnung zum Versand von Short-Messages - SMs - von einem öffentlichen Telefon 10 zu Telekommunikationsendgeräten dargestellt. Die Anordnung zeigt beispielhaft zwei öffentliche Telefone 10, ein den öffentlichen Telefonen 10 zugeordnetes internes Telekommunikationsnetz 12, in dem sich ein die öffentlichen Telefone 10 verwaltender Rechner - Hintergrundsystem 14 - befindet, und ein Telekommunikationsnetz 16, an dem eine Vielzahl von Telekommunikationsteilnehmern über entsprechende Telekommunikationsanschlüsse mit ihren Telekommunikationsendgeräten 18, 20 angeschlossen sind. An das Telekommunikationsnetz 16 ist des Weiteren ein Nachrichtenrechner - Short-Message-Service-Center Festnetz-Server 22 - über eine Anschlussleitung 24 angeschlossen.

An den SMS-Festnetz-Server 22 sind über Anschlussleitungen 26, 28 und 30 weitere Rechner 32 bis 36 angeschlossen. An die Anschlussleitung 26 ist beispielsweise ein SMSC-Mobilfunk-Server 32, an die Anschlussleitung 28 eine sogenannte T-Netbox 34, die die eingehenden, auf den von dem öffentlichen Telefon 10 gesandten SMs basierenden Daten in Sprachsignale wandelt, und an die Anschlussleitung 30 ist ein E-Mail-Server 36 angeschlossen, der die eintreffenden, auf den SMs basierenden Daten in entsprechende Datenformate umwandelt, sodass sie dem Empfänger via Internet als E-Mail zugestellt werden können.

Das Telefaxgerät 18 ist über eine Anschlussleitung 38 und das Telefon 20 über eine Anschlussleitung 40 mit dem Telekommunikationsnetz 16 verbunden.

Die öffentlichen Telefone 10 sind über Anschlussleitungen 42 an das interne Telekommunikationsnetz 12 für öffentliche Telefone 10 angeschlossen und werden von dem Hintergrundsystem 14 in bekannter Weise verwaltet, d. h. in dem Hintergrundsystem 14 erfolgt die Überwachung, Abrechnung und ähnliches der öffentlichen Telefone 10. Das Telekommunikationsnetz 12 ist über Anschlussleitungen 44 mit dem Telekommunikationsnetz 16 verbunden.

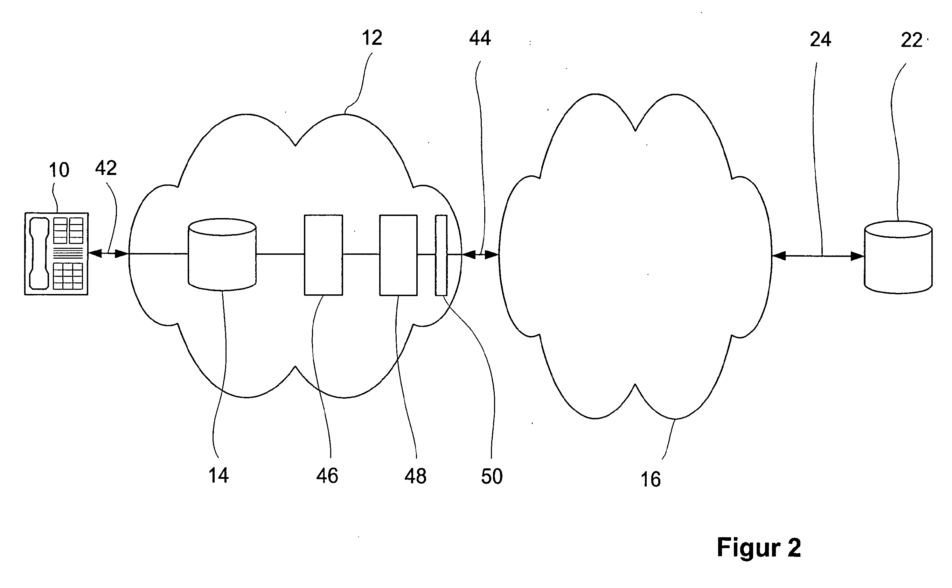

Der detaillierte schematische Aufbau des Telekommunikationsnetzes 12 ist der Fig. 2 zu entnehmen, in der eine erste Ausführungsform der Erfindung dargestellt ist. Dem Hintergrundsystem 14 sind in dem Telekommunikationsnetz 12 ein Konverter 46, ein Transferrechner 48 sowie die das Telekommunikationsnetz 12 sichernde Firewall 50 nachgeschaltet.

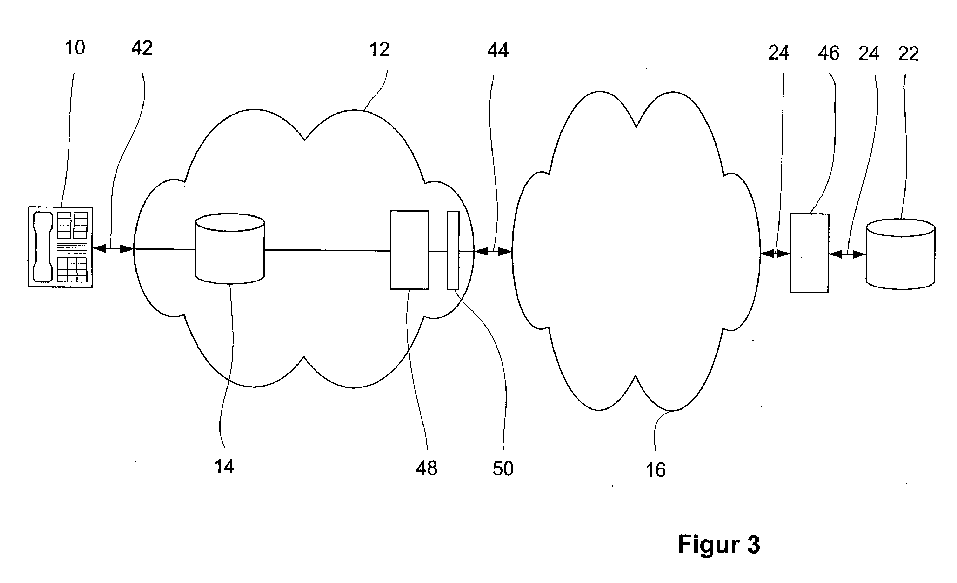

Eine zweite Ausführungsform ist in Fig. 3 dargestellt, in der der Konverter 46 in die Anschlussleitung 24 dem SMSC-Festnetz-Server 22 vorgeschaltet ist. Ansonsten ist der prinzipielle Aufbau der Gleiche wie in den vorhergehenden Figuren.

An dem öffentlichen Telefon 10 kann der Nutzer die verschiedenen Dienste des Short-Message-Service, nämlich Zustellung als Text, als Telefax, als E-Mail, oder als Sprachausgabe via T-Netbox auswählen. In dem weiter unten näher beschriebenen Verfahren gibt der Nutzer eine gewünschte Textnachricht über die Tastatur des öffentlichen Telefons 10 ein. Das öffentliche Telefon 10 speichert die Information als Textfile und schickt sie via vorgezogener Regelmeldung/Spontan-Meldung an das Hintergrundsystem 14, welches die Information transparent an den Konverter 46 weiterleitet. Dieser Konverter 46 hat die Aufgabe, die eintreffenden Nachrichten zeitnah in das UCP-Format zu wandeln und an den SMSC-Festnetz-Server 22 zu übertragen.

Gemäß Fig. 2 befindet sich der Konverter 46 innerhalb des Telekommunikationsnetzes 12, also des geschlossenen Netzes für öffentliche Telefone 10, und ist funktionsmäßig entweder in die Hardware des Hintergrundsystems 14 integriert oder als separater Rechner, wie in Fig. 2 dargestellt, ausgebildet. Die Weiterreichung der Daten an den SMSC-Festnetz-Server 22 erfolgt via Transferrechner 48 und Firewall 50. Daten von dem SMSC-Festnetz-Server 22 werden nicht an die öffentlichen Telefone 10 geschickt, da in der Regel diese Funktion nicht benötigt wird.

Gemäß Fig. 3 werden die Daten der Textnachricht direkt von dem Hintergrundsystem 14 an den Transferrechner 48 übertragen. Über die Firewall 50 und das Telekommunikationsnetz 16 gelangen die Daten dann zu dem Konverter 46, der in einem separaten Modul dem SMSC-Festnetz-Server 22 vorgeschaltet ist und die Daten in das UCP-Format umwandelt.

Öffentliche Telefone 10 sind mit einer Bezahleinheit ausgestattet. Eine derartige Bezahleinheit wird heutzutage in der Regel von einem Telefonkartenlesegerät gebildet. Über die Bezahleinheit wird ein Guthaben ausgewiesen. Mit diesem Guthaben können dann die Dienste des öffentlichen Telefons 10 in Anspruch genommen werden. Das Guthaben wird der Bezahleinheit, also dem Telefonkartenlesegerät in Form einer Telefonwertkarte zugeführt. Es können aber auch über Münzen oder andere Karten der dann entsprechend ausgebildeten Bezahleinheit das Guthaben zugeführt werden.

Nach der Erfindung ist das öffentliche Telefon 10 mit dem Dienst Versenden von SMs-Nachrichtenpaketen ausgestattet. Alle Textnachrichten werden im Offline-Betrieb erstellt, d. h. die Leitung ist nicht belegt. Das Leistungsmerkmal SMs-Versenden steht sowohl bei abgehobenem als auch bei aufgelegtem Hörer des öffentlichen Telefons 10 zur Verfügung.

Der Hörer ist abgehoben, es steckt keine Telefonwertkarte in der Bezahleinheit des öffentlichen Telefons 10: es erscheint im Display des öffentlichen Telefons 10 die Aufforderung, eine Telefonwertkarte einzuschieben. Die Telefonwertkarte wird eingeschoben, das Guthaben wird geprüft. Das Mindestguthaben beträgt beispielsweise 0,20 EURO. Dies ist jedoch über das Hintergrundsystem 14 einstellbar. Das Guthaben wird 15 Sekunden angezeigt.

Alternativ hierzu ist der Hörer nunmehr abgehoben und es steckt eine Telefonwertkarte in der Bezahleinheit des öffentlichen Telefons: es wird das Guthaben im Display des öffentlichen Telefons 10 angezeigt. Bereits bei abgehobenem Telefonhörer und bei nicht eingesteckter Telefonwertkarte sowie bei eingesteckter Telefonwertkarte ertönt ein vorbestimmter Ton im Hörer, der dem Nutzer die Betriebsbereitschaft des öffentlichen Telefons 10 mitteilt. Die Leitung wird jedoch nicht belegt. Vom Nutzer wird nunmehr eine vorbestimmte SMs-Taste gedrückt, wodurch festgelegt wird, dass eine Textnachricht über das öffentliche Telefon 10 verschickt werden soll.

Dasselbe Prozedere kann auch durchgeführt werden, wenn der Hörer des öffentlichen Telefons 10 aufgelegt ist. Es steckt keine Telefonwertkarte in der Bezahleinheit des öffentlichen Telefons. Die SMs-Taste wird gedrückt. Hierauf erfolgt die Aufforderung, die Telefonwertkarte einzuschieben. Alternativ können auch Münzen und andere Karten angefordert werden. Dann wird das Guthaben im Display des öffentlichen Telefons 10 15 Sekunden angezeigt und es erfolgt die Prüfung des Mindestguthabens wie bei abgehobenem Hörer. Dann wechselt die Anzeige des öffentlichen Telefons 10 im Display zur Texteingabe.

Ist im Ausgangszustand der Hörer des öffentlichen Telefons 10 aufgelegt und steckt bereits eine Telefonwertkarte und wird die SMs-Taste gedrückt, so wird auch hier das Guthaben geprüft und man gelangt zur Texteingabe.

Die Texteingabe für die Übersendung der Textnachricht erfolgt in Großbuchstaben. Dabei stehen zwei Displayzeilen zu je 20 Zeilen des öffentlichen Telefons 10 zur Verfügung. Ein blinkender vertikaler Cursor deutet auf den Textanfang hin. In der zweiten Zeile wird ca. 2 Sekunden lang das Wort Texteingabe als Aufforderung zur Texteingabe eingeblendet. Wird die Taste "Pfeil nach rechts" gedrückt, wird der Cursor ein Zeichen weiter gestellt. Wird die Taste "Taste nach links" gedrückt, wird der Cursor ein Zeichen zurück gesetzt ohne das Zeichen zu löschen. Der Cursor funktioniert nur innerhalb der bestehenden Zeichen. Neue Zeichen werden eingefügt. Das Löschen von Zeichen erfolgt über eine Löschtaste - "⊗/C" -, vom Cursor her gesehen nach links oder in Richtung Textanfang.

Das öffentliche Telefon 10 hat in bekannter Weise eine Tastatur mit Ziffern und Zeichen, die mehrfach belegt sind. Die Mehrfachbelegung ist beispielsweise wie folgt:

| **Ziffer/Zeichen** | **Zusätzliche Bedruckung** | **Belegung/Funktion** |
|---|---|---|
| 1 | | 1 |
| 2 | A B C | A B C 2 Ä |
| 3 | D E F | D E F 3 |
| 4 | G H I | G H I 4 |
| 5 | J K L | J K L 5 |
| 6 | M N O | M N O 6 Ö |
| 7 | P Q R S | P Q R S 7 ß |
| 8 | T U V | T U V 8 Ü |
| 9 | W X Y Z | W X Y Z 9 |
| * | | * / ( ) < = > @ & % |
| 0 | | Leerzeichen . , ! ? : ; " " 0 |
| # | | # + - |
| ⊗/ C | | Löschtaste |
| →□ | | |
| °• | | |
| R | | |

Steuercodes mit Sternchen oder mit zwei schrägen Strichen und einem Querstrich am Anfang oder am Ende werden wie Text behandelt. Nach 155 Zeichen werden keine weiteren Zeichen für die Textnachricht angenommen. Mit Erreichen des 155sten Zeichens erfolgt ein Tonsignal, vergleichbar mit dem der Pin-Eingabe beim Mobiltelefon, um dem Nutzer anzuzeigen, dass die maximale Zahl an Zeichen eingegeben wurde.

Im öffentlichen Telefon 10 wird, für den Nutzer nicht sichtbar, das Wort "ÖTEL " im Textfeld fest voreingestellt eingetragen, sodass der Empfänger erkennt, dass der Absender von einem öffentlichen Telefon 10 die SMs-Nachricht abgesandt hat. Damit ergibt sich eine Gesamtnachrichtenlänge von 160 Zeichen, die einer bei dem SMs-Verfahren maximal möglichen Nachrichtenlänge entspricht.

Auf den numerischen Tasten sind jeweils drei bis vier Buchstaben angegeben, wie dies der oben angegebenen Tabelle zu entnehmen ist. Um beispielsweise den Buchstaben H einzugeben wird die Taste 4 dreimal gedrückt. Bei Tastenwechsel wird der Buchstabe automatisch bestätigt. Die Eingabe erfolgt somit wie beim Mobiltelefon.

Für die Texteingabe stehen die zwei oben genannten Displayzeilen ä 20 Zeichen zur Verfügung. Danach rutschen die bereits eingegebenen Zeichen in der ersten Displayzeile einzeln über den linken Rand aus dem Display weg. Wird die Tasteneingabe beendet, kann entweder die Taste "Zurück" oder "OK" gedrückt werden. Wird die Taste "Zurück" gedrückt, gelangt man zurück zum Hauptmenü und der Vorgang kann wiederholt werden. Bei Betätigen der Taste "Zurück" während der gesamten Menüführung gelangt man immer nur einen Schritt zurück und zwar zur vorherigen Eingabe. Soll der gesamte SMs-Versand abgebrochen werden, muss der Hörer entweder aufgelegt werden, wenn der Hörer abgehoben ist, oder der Hörer muss kurz abgehoben und dann wieder aufgelegt werden, wenn der Hörer aufgelegt ist.

Um das lästige Suchen von Zeichen auf der Tastatur für den Nutzer zu minimieren, wird gemäß einer Ausführungsform der Erfindung angeboten, dass bei der Texteingabe solange die Zeichen der gedrückten Taste in der nichtaktiven/beschriebenen Zeile die Zeichen angezeigt werden, bis ein Zeichen mit dem Cursor ausgewählt wurde. Es wird beispielsweise die Taste 9 gedrückt um das Zeichen W auszuwählen. Daraufhin erscheint in der nichtaktiven Zeile die Tastenbelegung "W X Y Z 9", aus der mittels Cursortaste das richtige Zeichen ausgewählt werden kann. Vor allem bei den Sonderzeichen, wie !,?,... bietet das Anzeigen der Restbelegung eine große Hilfestellung.

Wird nach der Texteingabe die Taste "OK" gedrückt, kommt die Anfrage, wohin die Nachricht gesendet werden soll. Bei der Rufnummernabfrage ist die Eingabe der Vorwahlnummer zu berücksichtigen. Daher wird bei jeder Abfrage im Display die Meldung "Bitte Vorwahl eingeben" ca. 2 Sekunden angezeigt. Die Taste "Rufnummer" wird gedrückt. Im Display erfolgt die Aufforderung zur Rufnummerneingabe. Nach Eingabe der Rufnummer erfolgt eine Plausibilitätsprüfung gemäß einer Tarifierungsmatrix. Dann werden vor dem entgültigen Versenden die Nachricht und die Rufnummer angezeigt.

Natürlich kann die Textnachricht an ein Telefaxgerät, an eine T-Netbox oder auch als E-Mail dem Empfänger zugestellt werden. Im folgenden wird der Versand als Telefax und als E-Mail beschrieben.

Zunächst zum Versenden der SMs an ein Telefaxaxgerät 18: es wird die Taste Telefaxnummer gedrückt. Im Display erscheint die Aufforderung zur Eingabe der Telefaxnummer. Nach Eingabe der Faxnummer" gelangt man zu den "Faxvorlagen". Der Kunde kann hier eine von drei Telefaxvorlagen auswählen. In diesem Fall ist je nach Vorlage die Kennziffer "Automatisch" vor die Telefaxnummer zu setzen. Beispielsweise Nr. 99 + Telefaxnummer "Standard deutsch", Nr. 98 + Telefaxnummer "Standard englisch", Nr. 97 + Telefaxnummer "Glückwunschfax".

Wird keine Telefaxvorlage gewählt, wird automatisch die deutsche Telefaxvorlage mit der Nr. 99 gesendet.

Nach Eingabe der Telefaxnummer erscheint vor entgültigem Versand das Kontrollfenster mit Zielrufnummer und Text.

Soll die Short Message als E-Mail versandt werden, wird wie folgt verfahren:

Eine Taste "als E-Mail versenden" wird gedrückt. Es folgt die Aufforderung zur Eingabe der E-Mail-Adresse. Wie bei der Texteingabe kann hier mit dem Cursor ein Zeichen vor- oder zurückgegangen werden. Auch die Löschtasten können hier verwendet werden - ⊗/C.

Zum Abschluss erscheint wieder vor dem entgültigen Versand das Kontrollfenster mit E-Mail-Adresse und Text.

Unabhängig davon, ob die Short Message an eine Rufnummer, Telefaxnummer, als E-Mail oder an eine T-Netbox versandt wird, erscheint immer das Kontrollfenster. Im Normalfall wird hier die Nachricht mit "Senden" bestätigt, worauf im Display die Bestätigungsmeldung "Die Short Message ist weitergeleitet!" für ca. 2 Sekunden eingeblendet wird. Wird die Taste "Senden" gedrückt, wird die Short Message mit Zeitstempel vom öffentlichen Telefon 10 an das Hintergrundsystem 14 weitergegeben . Der zu bezahlende Betrag wird von der Telefonwertkarte abgebucht. Wurde die Karte inzwischen gezogen, muss verhindert werden, dass die Short Message an das Hintergrundsystem 14 weitergeleitet wird. Der gesamte Vorgang "Versenden einer Short Message" wird dann abgebrochen.

Bevor das Kontrollfenster, also die Rufnummer/Telefaxnummer/E-Mail-Adresse und der Text im Display erscheint, wird abgefragt, ob der Kunde Werbung sehen will oder nicht. Es erscheint ein Lauftext der lautet: "Wenn Sie Werbung sehen möchten, dann können Sie Ihre Short Message gratis versenden". Nun kann der Nutzer entscheiden, ob er seine Short Message gratis versenden will. Entscheidet er sich für ja, wird ihm die Werbebotschaft max. 15 Sekunden in der zweiten Zeile als Lauftext mit max. 350 Zeichen eingespielt. Die Werbebotschaft ist jedoch nicht Inhalt der SMs. Danach erfolgt keine Abbuchung auf der Karte und die Short Message wird vom Endgerät an das Hintergrundsystem 14 gratis weitergegeben. Die Werbebotschaft wird vom Hintergrundsystem 14 an das öffentliche Telefon 10 eingespielt. Entscheidet sich der Kunde für nein, also dass er keine Werbebotschaft sehen möchte, erscheint das jeweilige Kontrollfenster, in dem die Nachricht mit "Zurück" oder "Senden" bestätigt werden muss.

Entscheidet sich der Kunde für ja, wird die Werbebotschaft eingespielt. Danach erscheint wieder das Kontrollfenster, welches mit "Zurück" oder "Senden" bestätigt werden muss.

Im Normalfall werden alle SMs direkt an das Hintergrundsystem 14 mit der Spontan-Meldung - 3 bis 4 Versuche - weitergeleitet. Es erfolgt keine Zwischenspeicherung im öffentlichen Telefon 10. Im Falle einer Störung oder bei nicht erfolgter Weiterleitung kann die Short Message nicht übertragen werden und es erscheint im Display des öffentlichen Telefons 10 folgende Mitteilung: "Short Message kann nicht weitergeleitet werden!". Der SMs-Dienst im öffentlichen Telefon 10 wird abgebrochen. Der Ausgangszustand des öffentlichen Telefons 10 wird hergestellt. Es erfolgt keine Sendewiederholung.

Nach der Erfindung wird auf einfache Weise die Attraktivität der öffentlichen Telefone 10 erhöht, indem ein neues Leistungsmerkmal in ein bestehendes System integriert wird. Zudem wird eine Anbindung an einen SMSC-Festnetz-Server 22 realisiert, der jedoch eine reine Übermittlungsaufgabe übernimmt. Die Abrechnung und Verwaltung des öffentlichen Telefons 10 erfolgt weiterhin über das Hintergrundsystem 14. Die Menüführung des öffentlichen Telefons 10 wurde an die bekannten Menüführungen zur Bedienung eines mobilen Telefons angelehnt, sodass der Nutzer des öffentlichen Telefons 10 sich schnell dem neuen Leistungsmerkmal nähern kann.

### BEZUGSZEICHENLISTE

- 10: öffentliches Telefon
- 12: Telekommunikationsnetz
- 14: Hintergrundsystem
- 16: Telekommunikationsnetz
- 18: Telefaxgerät
- 20: Telefongerät
- 22: SMSC-Festnetz-Server
- 24: Anschlussleitung
- 26: Anschlussleitung
- 28: Anschlussleitung
- 30: Anschlussleitung
- 32: SMSC-Mobilnetz-Server
- 34: T-Netbox
- 36: E-Mail-Server
- 38: Anschlussleitung
- 40: Anschlussleitung
- 42: Anschlussleitung
- 44: Anschlussleitung
- 46: Konverter
- 48: Transferrechner
- 50: Firewall

## Patentansprüche

1. Verfahren zum Versenden von Textnachrichten mittels eines Paketvermittlungsverfahrens von einem ersten Telekommunikationsendgerät (10) über ein Telekommunikationsnetz (12, 16) zu einem Nachrichtenserver (22), der die Textnachrichten an zumindest ein zweites Telekommunikationsendgerät/Empfänger (18, 20, 32, 34, 36) in einem ausgewählten Datenformat zustellt, von dem es akustisch und/oder optisch ausgegeben wird, **dadurch gekennzeichnet, dass** als erstes Telekommunikationsendgerät ein öffentliches, mit einer Bezahleinheit versehenes Telefon (10) verwendet wird, das von einem von der Bezahleinheit ausgewiesenen Guthaben einen Betrag für geleistete Telekommunikationsdienste abbucht, und dass die Textnachricht über Eingabemittel des öffentlichen Telefons (10) eingegeben wird.

2. Verfahren nach Anspruch 1, **gekennzeichnet durch** folgende Verfahrenschritte:
- über Eingabemittel wird die Einstellung des öffentlichen Telefons (10) zur Eingabe und Übermittlung einer Textnachricht vorgenommen,
- die Eingabe der aus mehreren Zeichen bestehenden Textnachricht wird über die Eingabemittel durchgeführt,
- die Rufnummer des Anschlusses des zweiten Telekommunikationsendgerätes (18, 20, 32, 34, 36) wird über die Eingabemittel eingegeben, und
- die Textnachricht wird über den Nachrichtenserver (22) dem zweiten Telekommunikationsendgerät (18, 20, 32, 34, 36) zugestellt.

3. Verfahren nach Anspruch 2, **dadurch gekennzeichnet, dass** das Ende der Eingabe der Textnachricht und/oder der Rufnummer durch die Art der Eingabe, wie Betätigen vorbestimmter Eingabemittel, festgelegt wird.

4. Verfahren nach einem der vorangehenden Ansprüche, **dadurch gekennzeichnet, dass** die Eingabemittel durch die Tastatur des öffentlichen Telefons (10) gebildet werden.

5. Verfahren nach Anspruch 4, **dadurch gekennzeichnet, dass** die Tasten der Tastatur des öffentlichen Telefons (10) mehrfach mit Zahlen, Ziffern und Zeichen belegt werden.

6. Verfahren nach einem der vorangehenden Ansprüche, **dadurch gekennzeichnet, dass** die Anzahl einzugebenden Zeichen für die Textnachricht beschränkt wird.

7. Verfahren nach Anspruch 5, **dadurch gekennzeichnet, dass** das Erreichen der maximal möglichen Zahl an eingegebenen Zeichen dem Nutzer des öffentlichen Telefons (10) akustisch und/oder optisch mitgeteilt wird.

8. Verfahren nach einem der vorangehenden Ansprüche, **dadurch gekennzeichnet, dass** in die Textnachricht eine Kennung eingebracht wird, die den Absender in Form des öffentlichen Telefons (10) kennzeichnet.

9. Verfahren nach einem der vorangehenden Ansprüche, **dadurch gekennzeichnet, dass** das öffentliche Telefon (10) den Nutzer über eine Anzeigevorrichtung und/oder über akustische Anweisungen durch die einzelnen Bedienschritte zum Versenden der Textnachricht führt.

10. Verfahren nach einem der vorangehenden Ansprüche, **dadurch gekennzeichnet, dass** über Eingabemittel die Art der Zustellung oder der Ausgabe beim zweiten Telekommunikationsendgerät (18, 20, 32, 34, 36), wie Email, akustische Sprachausgabe, optische Anzeige, Telefax oder ähnliches, festgelegt wird.

11. Verfahren nach einem der vorangehenden Ansprüche, **dadurch gekennzeichnet, dass** zunächst überprüft wird, ob die Bezahleinheit ein Mindestguthaben ausweist, und bei Vorhandensein eines Mindestguthabens der Versand der Textnachricht freigegeben wird.

12. Verfahren nach einem der vorangehenden Ansprüche, **dadurch gekennzeichnet, dass** die Bezahleinheit durch ein Telefonwertkartenlesegerät gebildet wird, das mit einem die öffentlichen Telefone (10) verwaltenden Rechner - Hintergrundsystem (14) - zusammenarbeitet.

13. Verfahren nach einem der vorangehenden Ansprüche, **dadurch gekennzeichnet, dass** das Versenden der Textnachricht durch die Art der Eingabe, wie Betätigen vorbestimmter Eingabemittel, ausgelöst wird.

14. Verfahren nach Anspruch 13, **dadurch gekennzeichnet, dass** die Textnachricht von dem öffentlichen Telefon (10) an das Hintergrundsystem (14) weitergegeben wird, der zu bezahlende Betrag von dem Guthaben abgebucht wird und das Hintergrundsystem (14) die Textnachricht dann an den Nachrichtenserver (22) weiterleitet.

15. Verfahren nach einem der vorangehenden Ansprüche, **dadurch gekennzeichnet, dass** über die Eingabemittel die Ausgabe einer akustischen und/oder optischen Werbebotschaft über das öffentliche Telefon (10) aktiviert wird.

16. Verfahren nach Anspruch 15, **dadurch gekennzeichnet, dass** mit Aktivieren der Werbebotschaft der Versand der Textnachricht freigegeben wird.

17. Verfahren nach Anspruch 14 und 15 oder 16, **dadurch gekennzeichnet, dass** nach Aktivieren der Werbebotschaft eine Abbuchung vom Guthaben für den Versand der Textnachricht vollständig oder teilweise unterbleibt.

18. Verfahren nach einem der Ansprüche 15 bis 17, **dadurch gekennzeichnet, dass** die Werbebotschaft nach Aktivierung durch entsprechende Betätigung der Eingabemittel des öffentlichen Telefons (10) von dem Hintergrundsystem (14) mit der Regelmeldung an das öffentliche Telefon (10) übertragen, dort angezeigt und/oder ausgegeben wird.

19. Verfahren nach einem der vorangehenden Ansprüche, **dadurch gekennzeichnet, dass** die Textnachricht in Form des Short-Messages-Verfahrens - SMs-Verfahren - oder des Enhanced-Messages-Verfahrens - EMs-Verfahren - versandt wird.

20. Anordnung zur Durchführung des Verfahrens nach einem der vorangehenden Ansprüche.
